# EUROPÄISCHE PATENTANMELDUNG

(11) **EP 2 383 072 A1**
(43) Veröffentlichungstag der Anmeldung: **02.11.2011**
(21) Anmeldenummer: 11158050.2
(22) Anmeldetag: 14.03.2011
(51) Int. Cl.: B23Q 11/00, B23B 51/04

(54) **Bohrwerkzeug**

(30) Priorität: 28.04.2010 DE 102010028302
(71) Anmelder: HILTI Aktiengesellschaft, 9494 Schaan (LI)
(72) Erfinder: Hofbrucker, Thomas, 82291 Mammendorf (DE); Ohlendorf, Oliver, 86899 Landsberg (DE)

(57) **Zusammenfassung**

Ein Bohrwerkzeug hat einen Schaft und einen topfförmigen Grundkörper. In der zu einer Bohrseite offenen, ringförmigen Stirnfläche des Grundkörpers sind Meißelschneiden eingesetzt. In dem von der Bohrseite abgewandetem Boden des Grundkörpers ist radial versetzt zu einer Achse der Hammerbohrkrone wenigstens eine Absaugöffnung vorgesehen. Der Bohrstaub kann aus dem Grundkörper durch die Absaugöffnungen abgesaugt werden.

## Beschreibung

### GEBIET DER ERFINDUNG

Die vorliegende Erfindung betrifft ein Bohrwerkzeug für schlagende oder drehschlagende Bearbeitung von Stein, Beton oder anderen gesteinsartigen Materialien des Baugewerbes.

### OFFENBARUNG DER ERFINDUNG

Das erfindungsgemäße bohrmeißelnde Bohrwerkzeug hat einen Schaft und einen topfförmigen Grundkörper. In der zu einer Bohrseite offenen, ringförmigen Stirnfläche des Grundkörpers sind Meißelschneiden eingesetzt. In dem von der Bohrseite abgewandetem Boden des Grundkörpers ist radial versetzt zu einer Achse der Hammerbohrkrone wenigstens eine Absaugöffnung vorgesehen. Der Bohrstaub kann aus dem Grundkörper durch die Absaugöffnungen abgesaugt werden.

Die wenigstens eine Absaugöffnung kann in Bohrrichtung auf eine Achse des Grundkörpers zulaufen, d.h. schräg zur Achse verlaufen. Der Schaft kann mit einem sich kegelförmig erweiternden Fuß an den Boden angrenzen und die Absaugöffnung durch den Fuß verlaufen.

Die Meißelschneiden können aus Hartmetall sein. In einer Ausgestaltung sind die Schneidflächen einer Gruppe der Meißelschneiden radial orientiert und die Schneidflächen einer weiteren Gruppe der Meißelschneiden tangential zu der Stirnfläche orientiert. Die beiden Gruppen der Meißelschneiden sind um jeweils 90 Grad unterschiedlich zu dem Umfang orientiert. Die beim Meißeln und dem Drehversetzen der Meißelschneiden auftretenden Kräfte werden aufgrund der zwei Gruppen teilweise unterschiedlich in den Grundkörper und dessen Boden eingeleitet. Es wird gestützt durch Dauerbelastungstests von Bohrkronen mit derart angeordneten Meißelschneiden angenommen, dass hierdurch ein effizienterer Abbau und eine geringere mechanische Belastung des Bodens erreicht werden kann.

Auf der Achse innerhalb des topfförmigen Grundkörper kann ein stabförmiger Zentrierbohrer angeordnet sein.

Eine Ausgestaltung sieht vor, dass die Absaugöffnungen in einem Abstand zu der Achse angeordnet sind, der zwischen 30 % und 70 % des Radius des Grundkörpers beträgt. Es können maximal fünf Absaugöffnungen vorgesehen sein, bei einer höheren Anzahl wird der Boden weich und kann Schläge dämpfen.

Eine Ausgestaltung sieht vor, dass ein Absaugrohr koaxial zu dem Schaft angeordnet ist und wenigstens abschnittsweise an dem Boden die Absaugöffnung umgebend anliegt. Ein Außendurchmesser des Absaugrohrs kann geringer als ein Außendurchmesser des Grundkörpers sein. Das Absaugrohr kann einen elastischen Faltenbalg oder telekopierbare Hülse aufweisen, deren ringförmiges Ende den Boden wenigstens abschnittsweise berührt. In dem Faltenbalg oder der telekopierbaren Hülse können seitliche Öffnungen vorgesehen sein, durch die Luft eingesaugt werden kann. Das Absaugrohr kann an seiner in Bohrrichtung weisenden ringförmigen Stirnfläche umfänglich erste Abschnitte und zweite Abschnitte aufweisen, wobei die ersten Abschnitte gegenüber den zweiten Abschnitten um maximal 3 mm in Bohrrichtung vorstehen. Die ersten Abschnitte oder Erhebungen beabstanden das Absaugrohr derart von dem Boden, dass Schlitze zwischen den zweiten Abschnitten und der ringförmigen Stirnfläche entstehen. Ein Anteil der ersten Abschnitte an dem Umfang der Stirnfläche beträgt z.B. zwischen 10 % und 20 %.

Eine Ausgestaltung sieht vor, dass innerhalb des Absaugrohrs zur Achse vorstehende Rippen angeordnet sind, deren zur Achse weisende Facetten den Schaft berühren.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Bohrwerkzeug im Längsschnitt,
- Fig. 2: eine Draufsicht auf das Bohrwerkzeug,
- Fig. 3: eine Detailansicht,
- Fig. 4: eine Detailansicht einer weiteren Ausführungsform.
Gleiche oder funktionsgleiche Elemente werden durch gleiche Bezugszeichen in den Figuren indiziert, soweit nicht anders angegeben.

### AUSFÜHRUNGSFORMEN DER ERFINDUNG

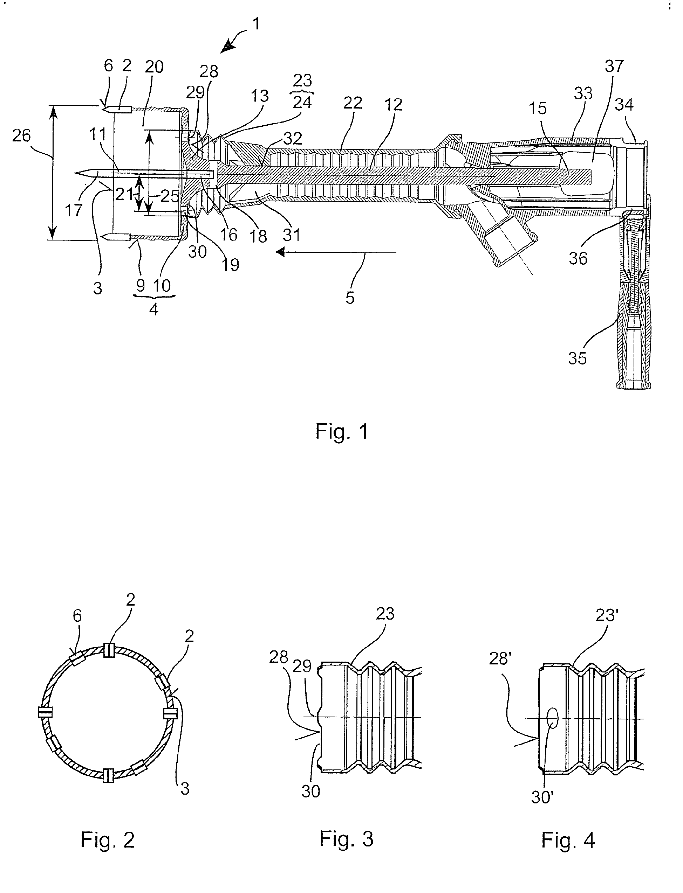

Fig. 1 zeigt eine Hammerbohrkrone **1** in einem Längsschnitt und Fig. 2 in einer Draufsicht. Die Hammerbohrkrone **1** hat mehrere Meißelschneiden **2,** die in eine ringförmigen Stirnfläche **3** eines zylindrischen Grundkörper **4** eingesetzt sind. Die Meißelschneiden **2** sind vorzugsweise aus Hartmetall, z.B. aus gesintertem Verbundwerkstoff mit Wolframcarbid, und sind für einen meißelnden und schneidenden Abbau von Stein, Beton oder mineralischen Bauwerkstoffen geeignet. Die Meißelschneiden **2** überragen die Stirnfläche **3** in Bohrrichtung **5.** Die Meißelschneiden **2** können eine oder zwei zur Stirnfläche **3** des Grundkörpers **4** geneigte Schneidflächen **6** aufweisen. In einer bevorzugten Ausführungsform sind die Meißelschneiden **2** unterschiedlich orientiert in die Stirnfläche **3** eingesetzt. Während bei einer ersten Gruppe der Meißelschneiden **2** die Schneidflächen **6** in radialer Richtung verlaufen, sind bei einer zweiten Gruppe die Schneidflächen **6** tangential zu der ringförmigen Stirnfläche **3** ausgerichtet. Die unterschiedliche Ausrichtung erweist sich als vorteilhaft bei der Verteilung der Stoßwellen beim Schlagbohren. Eine radiale Abmessung der Meißelschneiden **2** kann größer als eine Stärke der Stirnfläche **3,** d.h. die Differenz eines äußeren zu einem inneren Radius, sein. Insbesondere können die Meißelschneiden **2** die Stirnfläche **3** radial nach Außen überragen, um einen Bohrdurchmesser zu definieren.

Eine den zylindrischen Grundkörper **4** radial begrenzende Wand **9** ist vorzugsweise vollständig geschlossen. An einer der Bohrseite abgewandten Stirnfläche schließt ein Boden **10** den Grundkörper **4** senkrecht zu dessen Achse **11** ab.

Ein stabförmiger Schaft **12** grenzt in Verlängerung der Achse **11** an den Boden **10** des Grundkörpers **4** an. Der Schaft **12** und der Grundkörper **4** können aus einem Rohling hergestellt sein, d.h. ohne Fügenaht oder sonstige Verbindungsstelle. Der Schaft **12** kann einen sich kegelförmig aufweitenden Fuß **13** aufweisen, welcher mit dem Boden **10** verbunden ist. Ein von dem Grundkörper **4** abgewandter Endabschnitt ist zu einem Einsteckende **14** mit offenen und geschlossenen Nuten für eine drehschlagende Werkzeugmaschine ausgebildet.

Durch den Boden **10** in den Schaft **12** ist ein koaxial zur Achse **11** verlaufendes Sackloch **16** eingebracht. Das Sackloch **16** dient zur Aufnahme eines Zentrierbohrers **17.** Das Sackloch **16** kann entgegen der Bohrrichtung **5** derart konisch zulaufend sein, dass der eingesetzte Zentrierbohrer **17** einklemmt. Eine das Sackloch **16** kreuzende Bohrung **18** verläuft durch den Schaft **12.** Ein Benutzer kann durch Eintreiben eines Stifts in die Bohrung den Zentrierbohrer aus dem Sackloch **16** schieben. Der auf der Achse **11** angeordnete Zentrierbohrer **17** steht in Bohrrichtung **5** über die Stirnfläche **3** hinaus.

Absaugöffnungen **19** sind in den Boden **10** eingebracht, welche ein Absaugen aus einem Innenraum **20** des Grundkörpers **4** ermöglichen. Die Absaugöffnungen **19** können die mechanische Stabilität der Hammerbohrkrone **1** schwächen, insbesondere in Hinblick auf die regelmäßig über den Schaft **12** von der schlagenden Handwerkzeugmaschine in den Grundkörper **4** eingeleiteten Schläge. Die Absaugöffnungen **19** sind in einem Abstand **21** zwischen 30 % und 70 % des Außenradius des Grundkörpers **4** zu der Achse **11** angeordnet. In einer Ausführungsform verlaufen die Absaugöffnungen **19** geneigt oder schräg zur Achse **11,** wobei sie in Bohrrichtung **5** auf die Achse **11** zulaufen. Die Absaugöffnungen **19** können vorzugsweise durch den Fuß **13** des Schafts **12** verlaufen. Ein Durchmesser der Absaugöffnungen **19** kann beispielsweise im Bereich von 3 mm bis 10 mm groß sein. Es sind maximal fünf Absaugöffnungen **19** vorgesehen. Die Absaugöffnungen **19** können auch als Langlöcher ausgebildet sein.

Ein Absaugrohr **22** ist über den Schaft **12** der Hammerbohrkrone **1** gestülpt. Ein vorderes Ende **23** des Absaugrohrs **22** liegt außen an dem Boden **10** des Grundkörpers **4** an und überdeckt die Absaugöffnungen **19.** Das vordere Ende ist vorzugsweise durch einen elastischer Faltenbalg **24** gebildet. Der elastische Faltenbalg **24** dient dem Ausgleichen aufgrund von Toleranzen unterschiedlich langer Schäfte **12.** Ein Außendurchmesser **25** des Faltenbalgs **24** ist geringer als ein Außendurchmesser **26** des Grundkörpers **4.** Ein Innendurchmesser des Faltenbalgs **24** ist zumindest im Bereich der Anlagefläche mit dem Boden **10** größer als der Abstand der Absaugöffnungen **19** zu der Achse **11.** Anstelle eines Faltenbalgs **24** kann eine axial verschiebliche Hülse auf dem Absaugrohr **22** angeordnet sein. Das System aus Absaugrohr **22** und Hülse sind somit telekopierbar und in ihrer Länge an die Länge der Hammerbohrkrone **1** anpassbar.

Eine ringförmige Stirnfläche **28** des vorderen Endes **23** liegt vorzugsweise nur in Abschnitten und nicht als geschlossener Ring an dem Boden **10** an (vgl. Detailansicht in Fig. 3). Die Stirnfläche **28** hat mehrere längs seines Umfangs verteilt angeordnete Noppen **29 ,** welche in Bohrrichtung **5** vorstehen. Zwischen dem Absaugrohr **22** und dem Boden **10** bilden sich mehrere Schlitze **30** aus, durch welche Luft in das Absaugrohr **22** eingesaugt werden kann. Der zusätzliche Luftstrom kann den Luftstrom durch die Absaugöffnungen **19** begünstigen oder Luft entlang einer Außenseite des Grundkörpers **4** ansaugen. Die Auflagefläche der Stirnfläche **28** auf dem Boden **10** beträgt aufgrund der vorstehenden Noppen **29** nur etwa 10 % bis 20 % der Stirnfläche **28.** Zwischen den nicht-aufliegenden Bereichen der Stirnfläche **28** und dem Boden **10** der Hammerbohrkrone **1** bilden sich die Schlitze **30.** Die Schlitze **30** haben eine begrenzte Höhe (Abmessung längs der Achse **11**) z.B. zwischen 1 mm bis 3 mm, die Noppen **29** sind entsprechend hoch ausgebildet. Bei einer größeren Höhe der Noppen **29** verringert sich der Luftstrom durch die Absaugöffnungen **19** merklich und die Reinigungsleistung schwindet.

In einer weiteren Ausgestaltung (Fig. 4) sind Öffnungen **30'** nahe der Stirnfläche **28'** vorgesehen. Die Öffnungen **30'** haben beispielsweise einen Querschnittsfläche von 5 bis 20 mm2. Die Öffnungen **30'** können zusätzlich oder alternativ zu den Schlitzen **30** vorgesehen werden. In der dargestellten Ausführungsform ist die Stirnfläche **28** eben und kann vollständig an dem Boden **10** anliegen.

Das vorzugsweise rohrförmige Absaugrohr **22** hat einen Innendurchmesser, der derart größer als Schaft **12** der Hammerbohrkrone **1** ist, dass zwischen dem Absaugrohr **22** und dem Schaft **12** Staub abgesaugt werden kann. Zur Stabilisierung des Absaugrohrs **22** sind radial nach Innen zur Achse **11** ragende Rippen **31** vorgesehen. Die beispielsweise sechs Rippen **31** sind in verschiedenen Winkelpositionen um die Achse **11** und auf gleicher Höhe entlang der Achse **11** angeordnet. Die Rippen **31** sind vorzugsweise äquidistant um die Achse **11** angeordnet, d.h. bei sechs Rippen **31** in jeweils 60 Grad zueinander. Der Abstand der Rippen **31** zu der Stirnfläche **28** kann z.B. zwischen 4 cm und 10 cm betragen. Ein Abstand der zur Achse **11** weisenden Facetten **32** entspricht vorzugsweise dem Radius eines standardmäßigen Schafts **12,** z.B. 1 cm bis 2 cm. Das lange Absaugrohr **22,** z.B. länger als 20 cm, kann sich seitlich an dem Schaft **12** abstützten.

Das Absaugrohr **22** ist mit einer hülsenförmigen Halterung **33** verbunden, welche beispielsweise über eine Werkzeugaufnahme der Werkzeugmaschine gestülpt werden kann. Die Halterung **33** ist in axialer Verlängerung zu dem Absaugrohr **22** angeordnet. Der über die Werkzeugaufnahme gestülpte Abschnitt kann ein seitliches Fenster **37** aufweisen, durch das die Werkzeugaufnahme betätigbar ist.

Die Halterung **33** kann mit einem Spannring **34** kann an einem Gehäuse der Werkzeugmaschine fixiert werden. Der Spannring **34** kann integraler Bestandteil eines Seitenhandgriffs **35** sein. Eine Drehung des Seitenhandgriffs **35** um seine Längsachse betätigt einen Vorspannmechanismus des Spannrings **34.** In dem dargestellten Beispiel zieht eine Schnecke einen Abschnitt des Spannrings **34** weg von der Achse **11** zu dem Seitenhandgriff, wodurch sich der Umfang des Spannrings **34** verkürzt und der Spannring **34** Werkzeugmaschine anklemmt. Die Halterung **33** kann eine Anlagebereich **36** mit einer zylindrischen Außenkontur **36** zum Anlegen des Spannrings **34** aufweisen. Der Anlagebereich **36** kann eine elastische Kunststoffkomponente enthalten.

## Patentansprüche

1. Bohrwerkzeug mit einem Schaft (**12**), einem topfförmigen Grundkörper (**4**), in dessen zu einer Bohrseite offenen, ringförmigen Stirnfläche (**3**) Meißelschneiden (**2**) eingesetzt sind, und in dessen von der Bohrseite abgewandetem Boden (**10**) radial versetzt zu einer Achse (**11**) des Bohrwerkzeugs (**1**) wenigstens eine Absaugöffnung (**19**) vorgesehen ist.

2. Bohrwerkzeug nach Anspruch 1, **dadurch gekennzeichnet, dass** die wenigstens eine Absaugöffnung (**19**) in Bohrrichtung (**5**) auf eine Achse (**11**) des Grundkörpers (**4**) zuläuft.

3. Bohrwerkzeug nach Anspruch 1 oder 2, **dadurch gekennzeichnet, dass** der Schaft (12) mit einem sich kegelförmig erweiternden Fuß (**13**) an den Boden (**10**) angrenzt und die Absaugöffnung (**19**) durch den Fuß (**13**) verläuft.

4. Bohrwerkzeug nach einem der vorhergehenden Ansprüche, **dadurch gekennzeichnet, dass** die Meißelschneiden (**2**) aus Hartmetall sind.

5. Bohrwerkzeug nach einem der vorhergehenden Ansprüche, **dadurch gekennzeichnet, dass** die Meißelschneiden (**2**) Schneidflächen (**6**) aufweisen, wobei die Schneidflächen (**6**) einer Gruppe der Meißelschneiden radial zu der ringförmigen Stirnfläche (**3**) orientiert und die Schneidflächen einer weiteren Gruppe der Meißelschneiden tangential zu der ringförmigen Stirnfläche (**3**) orientiert sind.

6. Bohrwerkzeug nach einem der vorhergehenden Ansprüche, **dadurch gekennzeichnet, dass** auf der Achse innerhalb des topfförmigen Grundkörper (**4**) ein stabförmiger Zentrierbohrer (**17**) angeordnet ist.

7. Bohrwerkzeug nach einem der vorhergehenden Ansprüche, **dadurch gekennzeichnet, dass** die Absaugöffnungen (**19**) in einem Abstand zu der Achse angeordnet sind, der zwischen 30 % und 70 % des Radius des Grundkörpers (**4**) beträgt.

8. Bohrwerkzeug nach einem der vorhergehenden Ansprüche, **dadurch gekennzeichnet, dass** maximal fünf Absaugöffnungen (**19**) vorgesehen sind.

9. Bohrwerkzeug nach einem der vorhergehenden Ansprüche, **dadurch gekennzeichnet, dass** ein Absaugrohr (**22**) koaxial zu dem Schaft (**12**) angeordnet ist und an dem Boden (**10**) die wenigstens eine Absaugöffnung (**19**) einschließend anliegt.

10. Bohrwerkzeug nach Anspruch 9, **dadurch gekennzeichnet, dass** ein Außendurchmesser des Absaugrohrs (**22**) geringer als ein Außendurchmesser des Grundkörpers (**4**) ist.

11. Bohrwerkzeug nach Anspruch 9 oder 10, **dadurch gekennzeichnet, dass** das Absaugrohr (**22**) einen elastischen Faltenbalg (**24**) aufweist, dessen ringförmiges Ende den Boden (**10**) wenigstens abschnittsweise berührt.

12. Bohrwerkzeug nach einem der Ansprüche 9 bis 11, **dadurch gekennzeichnet, dass** das Absaugrohr (**22**) an seiner in Bohrrichtung weisenden ringförmigen Stirnfläche (**28**) umfänglich erste Abschnitte (**29**) und zweite Abschnitte aufweist, wobei die ersten Abschnitte (**29**) gegenüber den zweiten Abschnitten um maximal 5 mm in Bohrrichtung (**5**) vorstehen sind

13. Bohrwerkzeug nach Anspruch 12, **dadurch gekennzeichnet, dass** ein Anteil der ersten Abschnitte an dem Umfang der Stirnfläche (**28**) zwischen 10 % und 20 % beträgt.

14. Bohrwerkzeug nach einem der Ansprüche 9 bis 13, **dadurch gekennzeichnet, dass** innerhalb des Absaugrohrs (**22**) zur Achse (**11**) vorstehende Rippen (**31**) angeordnet sind, deren zur Achse weisende Facetten (**32**) den Schaft (**12**) berühren.
